# EUROPEAN PATENT APPLICATION

(11) **EP 2 259 488 A1**
(43) Date of publication of application: **08.12.2010**
(21) Application number: 08722773.2
(22) Date of filing: 25.03.2008
(51) Int. Cl.: H04L 9/10

(54) **ENCRYPTION OPERATION DEVICE, ENCRYPTION OPERATION PROGRAM, AND RECORDING MEDIUM**

(71) Applicant: Mitsubishi Electric Corporation, Tokyo 100-8310 (JP)
(72) Inventor: SATO, Tsuneo, Tokyo 100-8310 (JP); SAEKI, Minoru, Tokyo 100-8310 (JP); MISAWA, Manabu, Tokyo 100-8310 (JP)
(74) Representative: Pfenning, Meinig & Partner GbR
(86) International application number: PCT/JP2008/055563
(87) International publication number: WO 2009/118829

(57) **Abstract**

A flowchart shows a general processing procedure of cryptographic computation executed by a cryptographic computation apparatus 100. A power supply is turned on in S101. In S102, a cryptographic computation execution program is fetched, and initialization such as memory allocation is performed. In S103, a plaintext is input, and the plaintext is stored by a RAM or the like. In S104, the cryptographic computation execution program is fetched, and the cryptographic computation is performed using a resistor or the RAM. In S105, a ciphertext is extracted. In S106, a CPU determines whether or not to continue a cryptographic computation process. In case of continuation, the flow returns to S102. In the above encryption process of S102 through S106, a resistor/memory input process (S200) is interposed between S103 and S104. In S200, before the cryptographic computation (S104) is started, data (e.g., a plaintext) that changes for each cryptographic computation is written in a register or memory to be used for the cryptographic computation. Then, the cryptographic computation is performed.

## Description

### Technical Field

The present invention relates to a cryptographic computation apparatus and cryptographic computation program which encrypt a plaintext.

### Background Art

In a conventional "cryptographic processing device and authentication application", computation of DES (Data Encryption Standard) and AES (Advanced Encryption Standard) is performed using a mask computation scheme. A transformational character conversion table and the data values of mask parameters which are necessary for computation are generated only when a parameter rewrite command is input (e.g., Patent Document 1). This improves the safety against a side-channel attack and suppresses the manufacturing cost.

In the conventional "cryptographic processing device and authentication application", since the computation is performed by means of the mask computation scheme, each time the mask is changed, the character conversion table must be updated. This takes time, resulting in a low overall computation speed. If the mask is fixed, once the mask becomes known, the secret key of the maskmaybe unlawfully acquired through a side-channel attack, causing a problem in security. Also, a processing procedure for updating the character conversion table may be attacked.
Patent Document 1: Unexamined Japanese Patent Application Publication No. 2007-6184, Page 18, Fig. 6 and Page 19, Fig. 7

### Disclosure of the Invention

### Problems to be Solved by the Invention

It is an object of the present invention to provide a programming technique which decreases the amount of "secret information" that leaks when a cryptographic computation apparatus is exposed to a side-channel attack such as power analysis, thus improving the resistance against the side-channel attack, and a cryptographic computation apparatus which uses this technique.

### Means to Solve the Problems

According to the present invention, there is provided a cryptographic computation apparatus which repeatedly executes an input conversion process including a process of inputting conversion target data which is a target of data conversion by a cryptographic computation and a process of converting the conversion target data input, into data by executing the cryptographic computation, the cryptographic computation apparatus comprising:
a data write unit which, using a CPU (Central Processing Unit), writes change data which is data that changes for each input conversion process in a predetermined storage area used for the cryptographic computation, before execution of the cryptographic computation in each input conversion process; and
a cryptographic computation execution unit which, using the CPU, executes the cryptographic computation by using the storage area where the change data is written, after the change data is written in the storage area by the data write unit.

The cryptographic computation uses a variable, the data write unit writes, using the CPU, change data that changes for each input conversion process in a storage area where data of the variable is to be stored, before the variable is used in the cryptographic computation of each input conversion process, and
the cryptographic computation execution unit executes, using the CPU, the cryptographic computation employing the variable, after the change data is written in the variable by the data write unit.

The cryptographic computation utilizes a function that uses the variable,
the data write unit writes the change data in the storage area for the variable to be used in the function, and
the cryptographic computation execution unit executes the cryptographic computation by applying to the function the variable in which the change data is written.

The data write unit generates the variable, and after the variable is generated, writes the change data in the storage area for the variable, calls the function, and passes to the function the variable in which the change data is written, and
the cryptographic computation execution unit executes the cryptographic computation by applying to the function the variable passed.

The data write unit calls the function, and after the function is called, generates the variable by executing an internal process of the function, and writes the change data in the storage area for the variable generated, and
the cryptographic computation execution unit executes the cryptographic computation by applying the variable, in which the change data is written through execution of the internal process of the function by the data write unit, to the function.

The change data comprises any one of
(a) a plaintext,
(b) a ciphertext,
(c) a process ID (IDentification) generated by the CPU for each input conversion process before the cryptographic computation,
(d) time data indicating current time and generated by the CPU, and
(e) a random number generated through a process of the CPU.

According to the present invention, there is provided a cryptographic computation program which repeatedly executes an input conversion process including a process of inputting conversion target data which is a target of data conversion by a cryptographic computation and a process of converting the conversion target data input, into data by executing the cryptographic computation, the cryptographic computation program comprising causing a computer to execute:
a process of writing change data which is data that changes for each input conversion process in a predetermined storage area used for the cryptographic computation, before execution of the cryptographic computation in each input conversion process; and
a process of executing the cryptographic computation by using the storage area where the change data is written, after the change data is written in the storage area.

According to the present invention, there is provided a cryptographic computation program which repeatedly executes an input conversion process including a process of inputting conversion target data which is a target of data conversion by a cryptographic computation and a process of converting the conversion target data input, into data by executing the cryptographic computation using a variable, the cryptographic computation program comprising causing a computer to execute:
a process of writing change data which changes for each input conversionprocess ina storage areawhere dataof the variable is to be stored, before the variable is used in the cryptographic computation in each input conversion process; and
a process of executing the cryptographic computation employing the variable after the change data is written in the storage area for the variable.

A computer-readable recording medium according to the present invention stores any cryptographic computation program.

### Effect of the Invention

The present invention can provide a programming technique which improves the resistance of a cryptographic computation apparatus against a side-channel attack, and a cryptographic computation apparatus with an improved resistance against a side-channel attack.

### Best Mode for Carrying out the Invention

### Embodiment 1

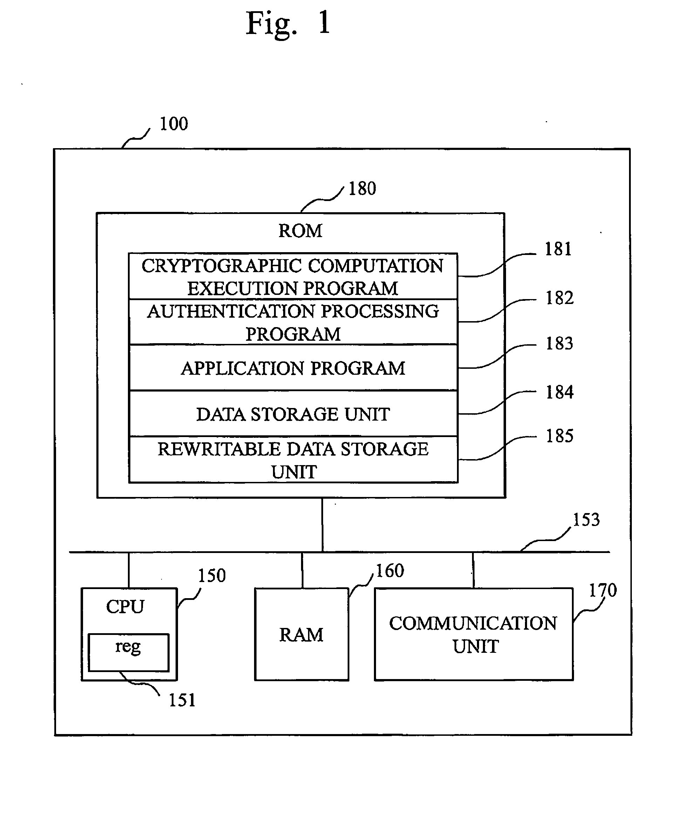

A cryptographic computation apparatus 100 according to the first embodiment will be described with reference to Figs. 1 to 7.

The following embodiment describes a case in which the cryptographic computation apparatus 100 inputs a plaintext (conversion target data) and encrypts (converts into data) the input plaintext. It is, however, apparent from the following description that since encryption and decryption are opposite processes, the cryptographic computation apparatus 100 is applicable not only to encryption of a plaintext but also to decryption (data conversion) of a ciphertext (conversion target data). In the following explanation, encryption, cryptographic computation, and the like should be interpreted in a wide meaning. Note that encryption, cryptographic computation, and the like signify "encryption" of aplaintext when the plaintext is the target of conversion into a ciphertext; and "decryption", "decryption computation", and the like of a ciphertext when the ciphertext is the target of conversion into a plaintext.

Fig. 1 shows examples of the hardware resources of the cryptographic computation apparatus 100 implemented by a computer. Referring to Fig. 1, the cryptographic computation apparatus 100 is provided with a CPU 150 (Central Processing Unit) which executes a program. The CPU 150 is provided with a register 151. The CPU 150 is connected to a RAM (Random Access Memory) 160, a communication unit 170, and a writable ROM (Read Only Memory) 180 via a bus 153. The CPU 150 controls these hardware devices.

The RAM 160 is an example of a volatile memory. The ROM 180 is an example of a nonvolatile memory. The RAM 160 and ROM 180 are examples of a storage device or unit and have a storage area used for the cryptographic computation. The communication unit 170 is an example of an input unit or input device. The communication unit 170 is an example of an output unit or device.

The ROM 180 stores various types of programs to be described later. These programs are read and executed by the CPU 150. These programs include programs which execute functions described as "units" in the following description of the embodiments.

In the following description of the embodiments, data and signal values are recorded by the register 151, the memory of the RAM 160, and the memory of the ROM 180.

In the following description of the embodiments, a "unit" may be a "means", a "circuit" , or a "device"; or a "step", a "procedure", or a "process". More specifically, a "unit" may be realized by a firmware stored by the ROM 180. Alternatively, a "unit" may be realized by software alone, hardware alone such as an element, a device, a substrate, or a wiring line, a combination of software and hardware, or a combination of software and firmware. Firmware and software are stored in the ROM 180 as programs. As described above, a program is read by the CPU 150 and executed by the CPU 150. More specifically, the program operates the computer as a "unit" to be described hereinafter. Alternatively, the program causes the computer to execute a procedure or method of the "unit" to be described hereinafter.

The CPU 150 determines various types of computations and control codes. The CPU 150 incorporates the register 151 which stores data during computation. The RAM 160 temporarily stores data too large to be entirely accommodated in the register 151. The ROM 180 can store programs and data such that they are nonvolatile. The communication unit 170 communicates with the outside. The bus 153 connects these constituent elements and transmits data. The ROM 180 incorporates programs such as a cryptographic computation execution program 181, an authentication processing program 182, and an application program 183; a data storage unit 184 which stores data that will not be deleted; and a rewritable data storage unit 185 in which data is rewritten where necessary. Other than these components, a co-processor of hardware may be packaged in the cryptographic computation apparatus 100 for the purpose of cryptographic computation. However, this is not directly associated with the first embodiment, and its description will accordingly be omitted.

(General Process of Cryptographic Program) Generally, in the cryptographic computation, using the register 151 and the RAM 160, the CPU 150 converts a plaintext externally input through a communication unit 170, into a ciphertext while fetching the cryptographic computation execution program 181. Since table data and key data necessary for the cryptographic computation are stored in the data storage unit 184 and the rewritable data storage unit 185, they are used where necessary. When the computation is ended, a resultant ciphertext is output to the outside.

### (Block Configuration)

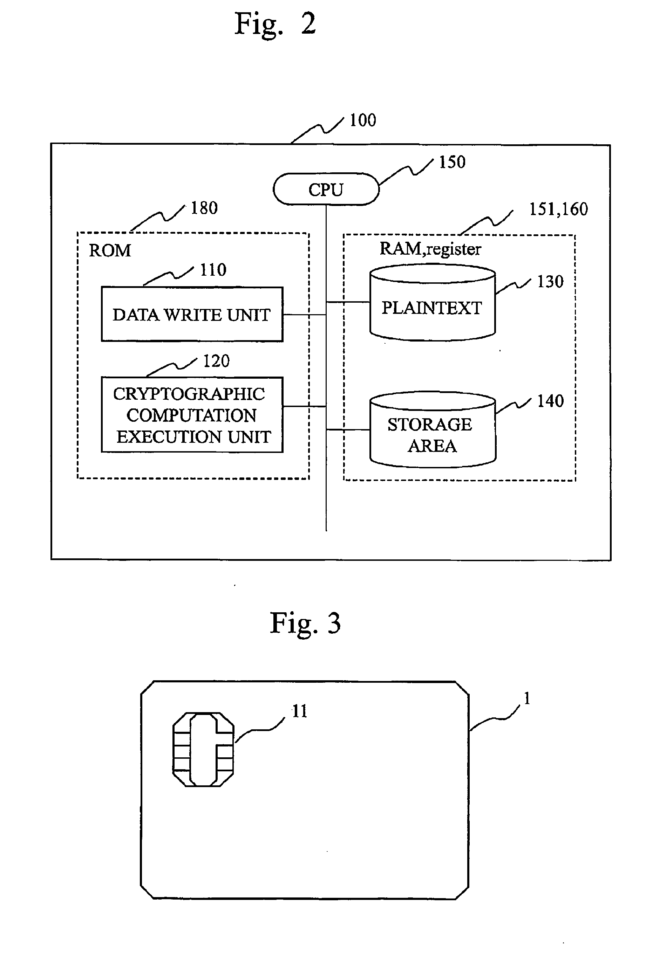

Fig. 2 is a block diagram of the cryptographic computation apparatus 100 of the second embodiment. The cryptographic computation apparatus 100 is provided with a data write unit 110, a cryptographic computation execution unit 120, a plain text storage unit 130 which stores a plaintext, a register, and a storage area 140 used for the cryptographic computation. The data write unit 110 and the cryptographic computation execution unit 120 correspond to the cryptographic computation execution program 181 in Fig. 1. The plaintext storage unit 130 corresponds to the RAM 160 in Fig. 1. The storage area 140 corresponds to the register 151, RAM 160, ROM 180, and the like in Fig. 1. As will be described later, by using the CPU, the data write unit 110 writes a plaintext in the storage area 140 before the cryptographic computation. With the CPU, the cryptographic computation execution unit 120 executes the cryptographic computation by using the storage area 140, after the data write unit 110 writes a plaintext in the storage area 140. The data write unit 110 and the cryptographic computation execution unit 120 will be described later in explanation of the operation.

### (IC Card)

Fig. 3 shows an IC (Integrated Circuit) card 1 as a typical example of the cryptographic computation apparatus 100 of the first embodiment. An IC is embedded in the IC card 1. The IC card 1 has a terminal 11 which serves as an I/F (InterFace) with an external unit. The terminal 11 maybe a GND terminal, a power supply terminal , a data communication terminal, a data write terminal, or the like. The IC card 1 has the hardware resources shown in Fig. 1. The following description is based on an assumption that the cryptographic computation apparatus 100 is an IC card 1.

### (General Encryption Process)

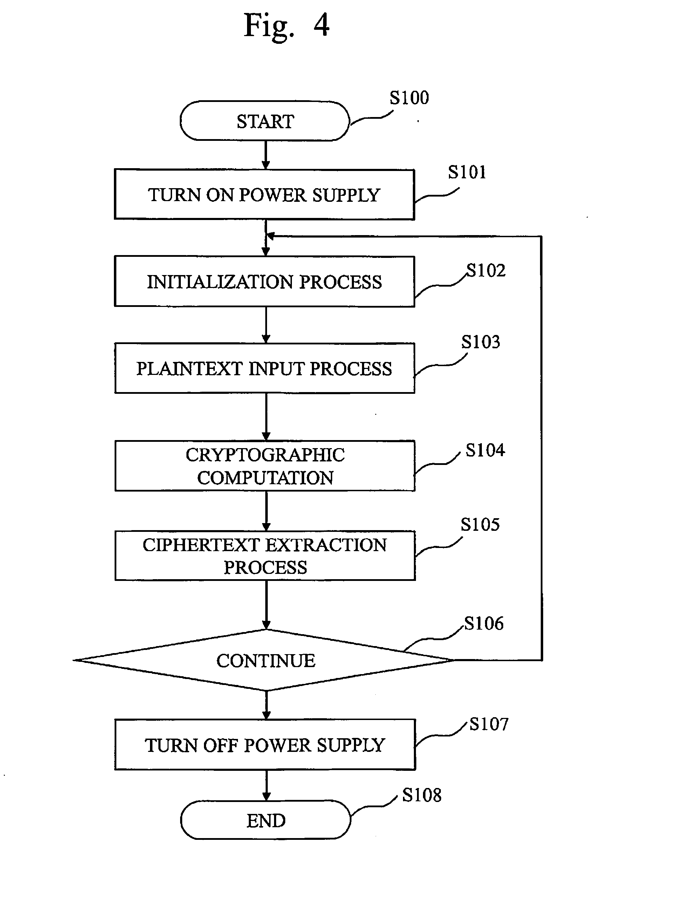

Fig. 4 is a flowchart of a general processing procedure. The general processing procedure of the cryptographic computation will be described with reference to Fig. 4. In S100, the process is started. In S101, power is supplied to the terminal 11, and the power supply is turned on. In S102, the cryptographic computation execution program 181 is fetched, and initialization such as memory allocation is performed. In S103, the CPU 150 awaits input of a plaintext from the terminal 11. When a plaintext is input, the CPU 150 stores it in the RAM 160 or the like. In S104, the cryptographic computation execution program 181 is fetched, and the cryptographic computation is performed using the register 151 and RAM 160. In S105, a ciphertext as the computation result is output. In S106, the CPU 150 judges whether the cryptographic computation is to be continued. If the cryptographic computation is to be continued, the process returns to S102, and the cryptographic computation is executed in the same manner. If the cryptographic computation is not to be continued, the process advances to S107, and the power supply is turned off.
Then, the process is ended in S108.

### (Feature of Cryptographic Computation Apparatus 100)

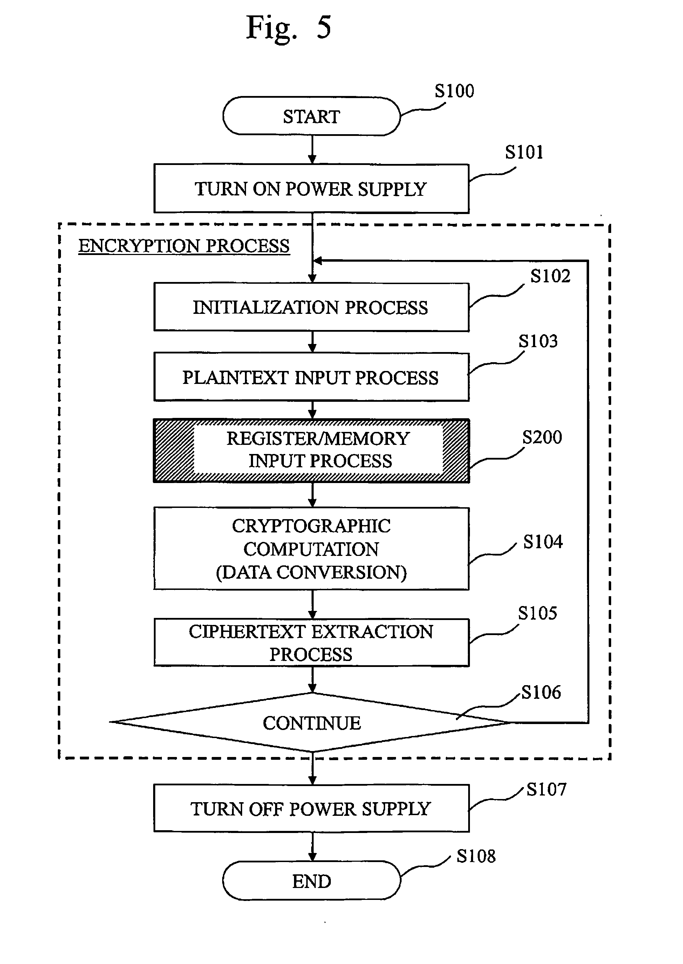

Fig. 5 is a flowchart showing the feature of the cryptographic process executed by the IC card 1 (cryptographic computation apparatus 100). Except for S200, Fig. 5 is identical to Fig. 4. In the cryptographic process of the IC card 1 of the first embodiment, a register/memory input process (S200) is interposed between S103 (plaintext input process) and S104 (cryptographic computation) in Fig. 4.

### (Content of S200)

As shown in Fig. 5, the IC card 1 repeatedly executes an encryption process (input conversion process) including the process of inputting a plaintext (conversion target data) (S103) and the process of encrypting (converting into data) the input plaintext by executing the cryptographic computation (S104) (the scope surrounded by a broken line in Fig. 5).
(1) In S200, using the CPU 150, the data write unit 110 writes "change data" which changes for each encryption process (cryptographic computation) in the predetermined storage area 140, e.g., the register 151 or a memory (RAM or ROM) used for this cryptographic computation, prior to execution of the cryptographic computation (S104) in each encryption process. Fig. 5 shows a case in which a plaintext is written as the "change data". That the "change data" changes for each encryption process signifies that the data of previous data write (S200) and the data of the current data write (S200) differ for each broken-line loop in Fig. 5. For example, the data write unit 110 writes in S200 "different data" (change data) in a predetermined storage area for each broken-line loop in Fig 5.
(2) In S104, using the CPU 150, the cryptographic computation execution unit 120 executes the cryptographic computation by using the storage area 140, after the predetermined data is written in the storage area 140 by the data write unit 110.

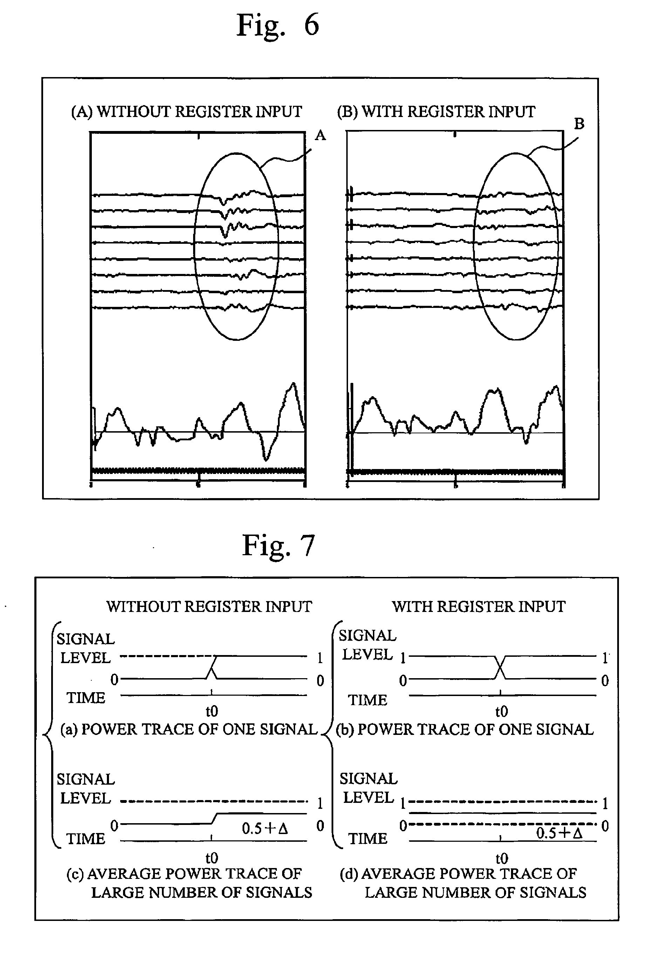

More specifically, in S200, the data write unit 110 writes a plaintext partly or entirely as data (change data) in the register or memory which is employed in the cryptographic computation (S104) and rewritten. By interposing this process, before the cryptographic computation execution unit 120 starts the cryptographic computation, all the registers and memories used in the cryptographic computation (S104) are filled with a plain text which changes each time. In other words, the state of the register or memory used in the cryptographic process (S104) immediately before the cryptographic computation differs for each cryptographic computation. As a result, the effects shown in Figs. 6 and 7 can be obtained. The effect obtained when S200 is added will be described with reference to Figs. 6 and 7. As the storage area of the register or memory which is used for the cryptographic computation is preset, the data write unit 110 can specify in which storage area to write.

Through comparison of the flowcharts of Figs. 4 and 5, a case will be shown in which power analysis as one type of side-channel attack is performed, and the effect of power analysis will be described.

Fig. 6 shows comparison of the result of power analysis in the flow of Fig. 4 and that in the flow of Fig. 5.
The graph "(A) Without Register Input" shows the result of the flow of Fig. 4.
The graph "(B) With Register Input" shows the result of the flow of Fig. 5.
Each of these graphs shows the result of power analysis obtained by measuring the power consumption of the CPU 150 that is needed as the CPU 150 executes the operation of Fig. 4 or 5. Eight traces in the upper half of each graph represent the result of power analysis.
In "(A) Without Register Input", traces having similar shapes are observed in a scope A surrounded by a circle. These traces are associated with the "secret information" that leaks. The heights of peaks change depending on the amount of leaking "secret information". As is apparent from a scope B which is equivalent to the scope A, in "(B) With Register Input" , no traces associated with "secret information" that leaks are observed. In other words, Fig. 6 shows that by adding the process of the "register/memory input process" (S200) of Fig. 5, the amount of leaking "secret information" can be decreased. Note that the traces in the lower half of the graph show a power consumption, trigger signal, and clock signal observed.

Fig. 7 schematically shows the phenomenon shown in Fig. 6.
Charts (a) and (c) correspond to "(A) Without Register Input".
Charts (b) and (d) correspond to "(B) With Register Input".
Observing one bit of a certain register, assume that data concerning "secret information" is to be written at time t0.

### (Without Register Input: (a), (c))

In "(A) Without Register Input", the bit value of the register is initialized to 0 in the initialization process S101. Hence, the signal level stays 0 since the initialization until time t0. After that, data concerning the "secret information" is written at time t0. Whether the data concerning the "secret information" is 0 or 1 is unclear, and accordingly two signal levels are shown in (a). In (c), power traces are measured a large number of times by changing the plaintext, and their average is obtained. In (c), as the signal level before time t0 is 0, the signal level indicated by the average power trace is also 0. After time t0, whether the signal level is 0 or 1 is unclear from the power trace of one signal, and accordingly the average is theoretically 0.5. In an actual device, however, the power consumption slightly differs between the state 0 and the state 1. As a result, a power trace corresponding to 0.5 + Δ is obtained.

### (With Register Input: (a), (c))

In "(B) With Register Input" of (b), the plaintext input process S102 and the register/memory input process S200 come after the initialization process S101. Thus, part of the plaintext is held by the register. Hence, as shown in (b), whether the signal level is 0 or 1 is unclear before and after time t0 alike. For this reason, (b) schematically shows two signal levels. In (d), a large number of power traces are measured by changing the plaintext, and their average is obtained.
In (d), whether the signal level is 0 or 1 is unclear from the power trace of one signal level before and after t0 alike, and accordingly the average is theoretically 0.5. In the actual device, however, the power consumption slightly differs between the state 0 and the state 1. As a result, a power trace corresponding to 0.5 + Δ is obtained.

With the power analysis scheme, the power traces are classified according to the expected value after time t0, and the differences from the expectedvalue are obtained. In the actual device, the power consumption slightly differs between a case in which the expected value is 1 and a case in which the expected value is 0 . Hence, the average power trace slightlydiffers between the case of "0.5 + Δ1" and the case of "0.5 + Δ0", and the difference in average power trace is observed to represent the "secret information" that leaks.
In (c), before time t0, since the expected signal level is fixed at 0, no difference depending on the expected value is observed, but after time t0, a difference from the expected value is observed. In (d), before time t0, a trace difference in which the state 0 and the state 1 are mixed is obtained. After time t0, a trace difference with a clear separation of the state 0 and the state 1 can be obtained. As is apparent from (c) and (d), the difference in power trace before and after time t0 is much small in (d). As a result, data as shown in Fig. 6 can be obtained.

### (Transistor Transition)

A case has been described for the purpose of simplicity, in which the power consumption differs between the state 1 and the state 0. However, the same explanation applies even to a case in which the power is consumed when the state changes from 1 to 0 (e.g., a state transition of a transistor which constitutes a logic circuit), and to a case in which the power is consumed when the state changes from 0 to 1. This is because the power consumed by a transistor in the CPU slightly differs between the case in which the state changes from 1 to 0 and the case in which the state changes from 1 to 0. By filling the register or memory with the plaintext before the cryptographic computation, the apparatus can resist an attack of power analysis during state transition of the transistor as well.

In the first embodiment, before the cryptographic computation, a plaintext that changes for each cryptographic computation is input to all registers and memories used for the cryptographic computation. This can prevent the state of data in the registers and memories from being fixed, so that data including the "secret information" during the cryptographic computation is overwritten in the registers and memories. As a result, the state of data of the registers and memories can be set unfixed before and after data write alike. Then, the amount of "secret information" that may leak upon exposure to a side-channel attack can be decreased, and the resistance against the side-channel attack can be improved.

Since no mask is used, mask exchange is unnecessary, so that the process time is not affected.

### (Data to be Written in Register)

In the first embodiment, plaintext is mentioned as the data that changes for each cryptographic computation. Note that this is merely an example. The data to be written in a register or the like is not limited to a plaintext, but can be a process ID (IDentification), current time generated by the CPU 150, or the like as far as it is data (change data) that changes for each cryptographic computation. When a ciphertext is to be decrypted (when the cryptographic computation apparatus 100 is a decryption apparatus), the ciphertext which is input as conversion target data may be written in a register or the like as "data that changes for each cryptographic computation". Even when the cryptographic computation apparatus 100 is an encryption apparatus, a ciphertext converted from a plaintext may be written as change data. Alternatively, the data may be a random number, as will be described in the second embodiment.

In the first embodiment, the IC card 1 is mentioned as an implementation of the cryptographic computation apparatus 100. Note that this is merely an example. Any apparatus that performs the cryptographic computation using a CPU can decrease the amount of "secret information" that may leak upon exposure to a side-channel attack described in the first embodiment. This embodiment can be effective for, e.g., a one-chip microcomputer, or a CPU used in a PC (Personal Computer).

### Embodiment 2

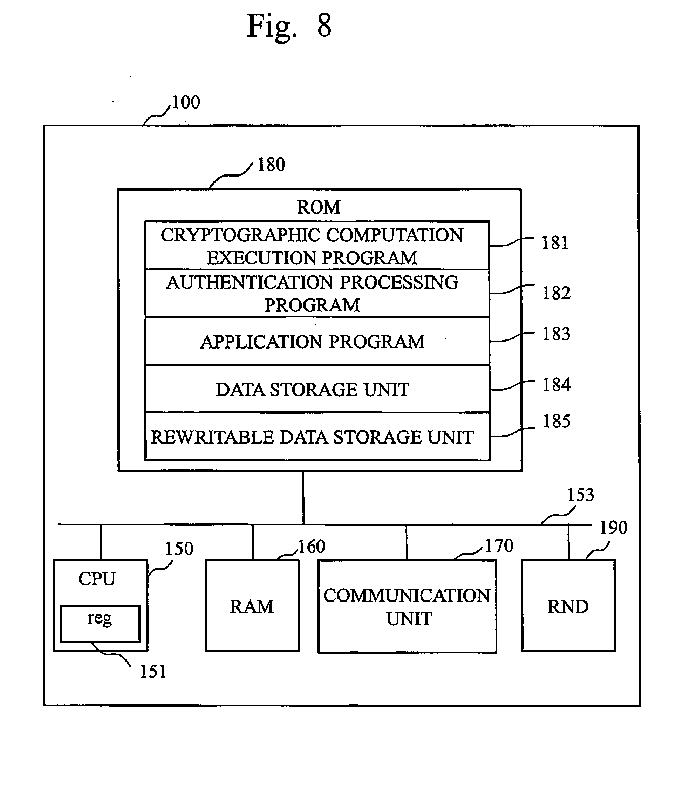

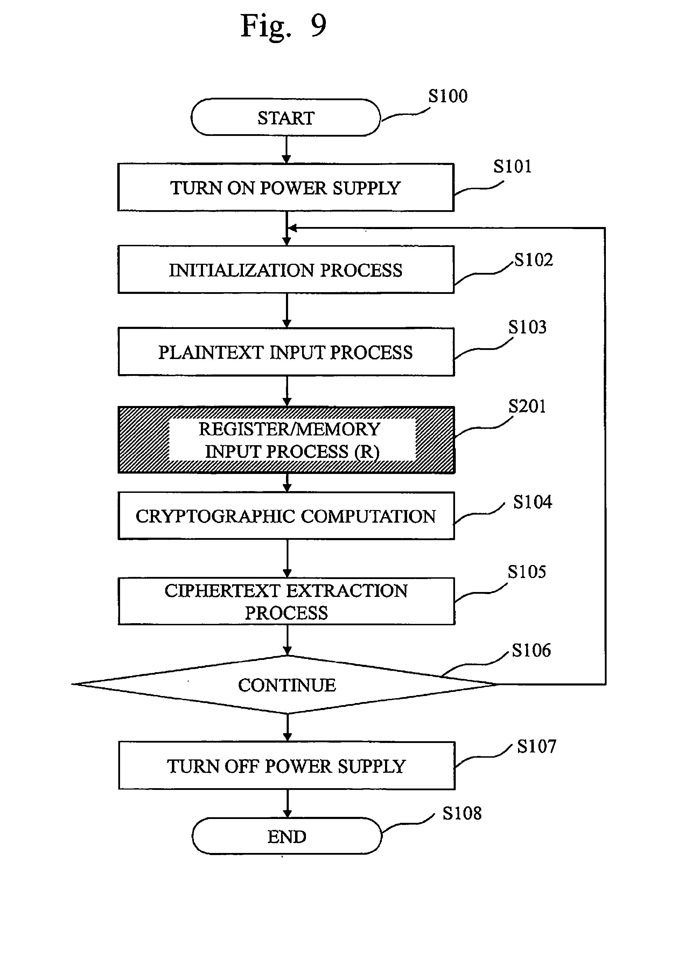

A cryptographic computation apparatus according to the second embodiment will be described with reference to Figs. 8 and 9. In the second embodiment, in place of a plaintext, a random number is written in a register or the like. Fig. 8 shows the hardware configuration of an IC card 1 (cryptographic computation apparatus 100) of the second embodiment. In Fig. 8, a random number generator 190 is added to the configuration of Fig. 1. More specifically, in the second embodiment, a random number (R) generated by the random number generator 190 is used as "data that changes for each cryptographic computation".

### (Use of Random Number)

Fig. 9 shows the flow of the cryptographic computation of the second embodiment. In Fig. 9, S201 replaces "S200" of the flowchart of Fig. 5. S201 is a register/memory input process (R) S201. In S201, a data write unit 110 writes a random number, or part of it, generated by the random number generator 190 using a CPU, in all registers and memories which are to be rewritten and used in the cryptographic computation (S104). By interposing this process, all registers and memories employed are filled with an unpredictable random number, in the same manner as in the first embodiment. In other words, the states of registers and memories, immediately before the cryptographic computation, employed in the cryptographic computation (S104) differ for each computation.

Therefore, the effect of the second embodiment is the same as that in Fig. 6. Furthermore, since a random number is used, the states of the registers and memories immediatelybefore use cannot be externally estimated, and the resistance against a selective plaintext attack can be increased.

Since no mask is used, mask exchange is unnecessary, so that the process time is not affected.

### Embodiment 3

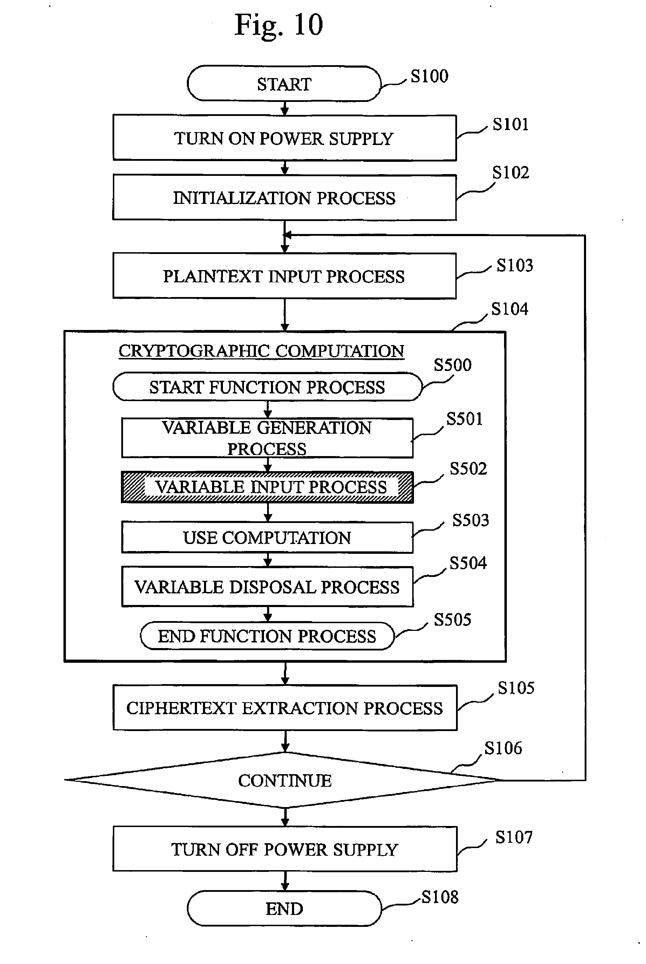

The third embodiment will be described with reference to Figs. 10 to 14. The third embodiment relates to use of a variable. The configuration of an IC card 1 (cryptographic computation apparatus 100) is the same as that of the first embodiment. Fig. 10 is a flowchart showing use of a variable. Fig. 10 is a flowchart showing a case in which a variable is used by the internal process of the cryptographic computation (S104) of Fig. 4.

The internal process of S104 starts with S500. A variable is generated in S501. The generated variable is used for the cryptographic computation performed by a cryptographic computation execution unit 120 (S503) after data (change data) that changes for each cryptographic computation is input in the generated variable by a data write unit 110 in S502. To input (write) change data in the variable signifies to write the change data in a storage area where the data of the variable is to be written. When the cryptographic computation is ended, the cryptographic computation execution unit 120 releases the memory used for the variable (S504), and the variable process is ended in S505. The "change data" is, e.g., a plaintext, a random number, a cipher, time, or a process ID, as described in the first and second embodiments.

As shown in Fig. 10, the cryptographic computation apparatus 100 repeatedly executes the encryption process (input conversion process) including the process of inputting a plaintext (conversion target data) and the process of encrypting (data-converting) the input plaintext (conversion target data) by executing the cryptographic computation using a variable. Using a CPU 150, the data write unit 110 writes a plaintext (an example of change data), which changes for each encryption process, in the variable before the variable is used in the cryptographic computation (S503) in each encryption process. By using the CPU 150 , the cryptographic computation execution unit 120 executes the cryptographic computation using the variable after the data write unit 110 writes the plaintext in the variable. More specifically, by using the CPU 150, the data write unit 110 writes change data that changes for each encryption process in a storage area where the data of the variable is to be stored, before the variable is used in the cryptographic computation (S104) in each encryption process (data conversion process). As a result, the state of variable differs for each cryptographic computation, so that the effect described with reference to Fig. 6 can be obtained. Also, since no mask is used, mask exchange is unnecessary, so that the process time is not affected.

### (Practical Case of Use of Variable)

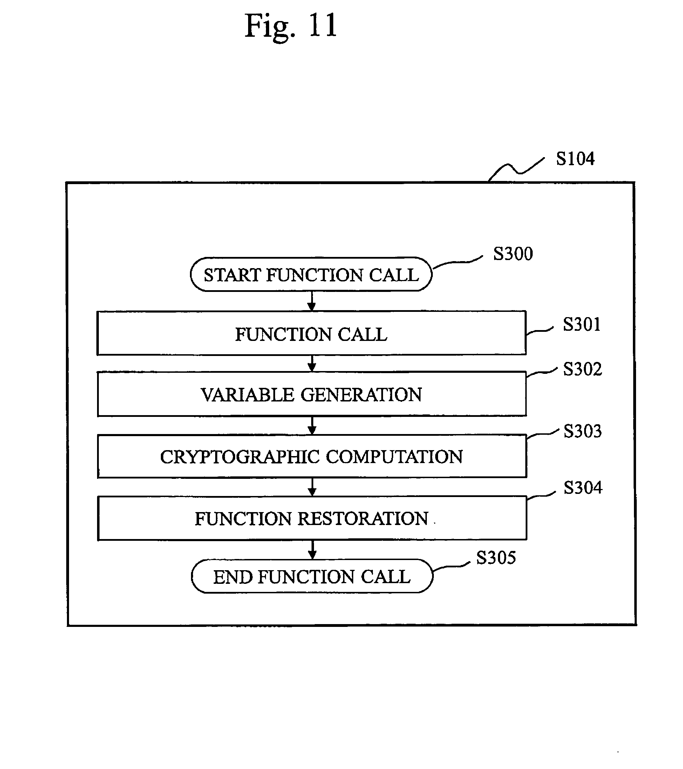

As a practical example of the use of a variable, a case of calling a function will be described with reference to Figs. 11 to 14. The following example is related to "Function call" which is employed often in programming. In the cryptographic computation, similar processes are performed a number of times. In order to create an efficient program, a function is generated, and computation is executed by giving a value to the function.

### (General Flow of Function Call)

Fig. 11 is a general function call f low and shows the internal process of S104 of Fig. 4. In S300, function call is started. In S301, a function is called. The value used by the function is passed to the function by "Call by value" or "Call by reference" . In S302, a variable used in the function is generated. An initial value for the generated variable is set. In S303, the cryptographic computation is performed using the value passed to the function and the generated variable. When the computation is ended, the result is passed to the function call side in S304, and the variable is released. In S305, the flow is ended.

### (Feature of Cryptographic computation Apparatus 100)

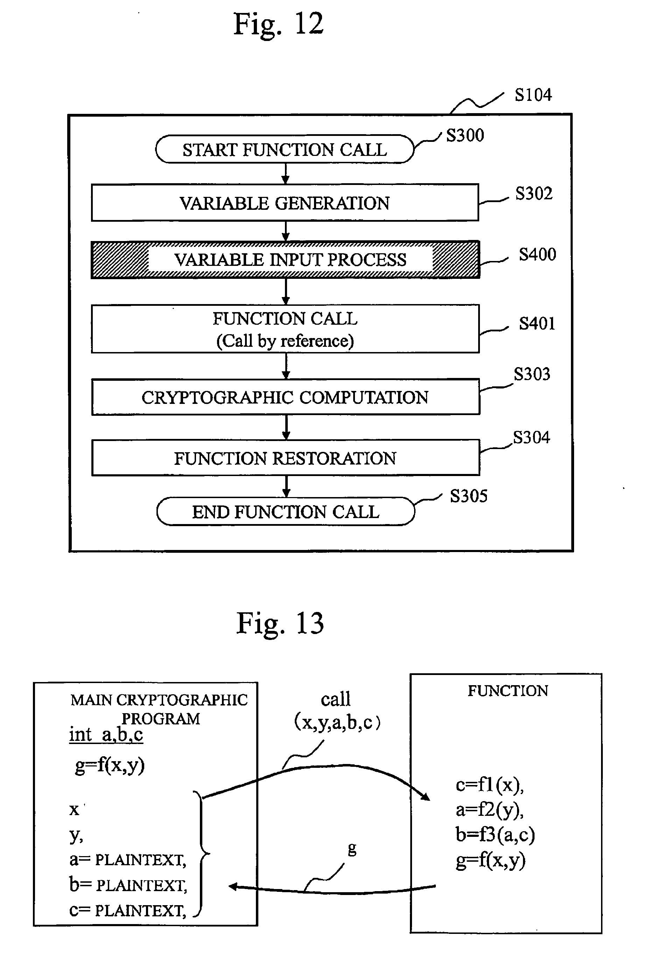

Fig. 12 shows the flow of function call by the cryptographic computation apparatus 100 according to the third embodiment. Fig. 12 corresponds to the internal process of S104 of Fig. 10. Fig. 13 is a conceptual view for explaining Fig. 12.

An explanation will be made using Figs. 12 and 13.
(1) The data write unit 110 generates variables a, b, and c to be used by the function (S302).
(2) The data write unit 110 inputs data (a plaintext or part of it), which changes for each cryptographic computation, to the generated variables a, b, and c (S400).
(3) The data write unit 110 calls the function by "Call by reference" (S401). Infunctioncall, the data write unit 110 passes, together with values x and y (arguments) used in the function, the variables a, b, and c in which the plaintext is written in S400, by "Call by reference".
(4) With the CPU, the cryptographic computation execution unit 120 executes the cryptographic computation by using the function to which the variables are passed. Because of the process of S400, the values to be used in the function, immediately before they are used in the function, and the states of variables differ for each cryptographic computation, so that the effect described with reference to Fig. 6 can be obtained. Also, since no mask is used, mask exchange is unnecessary, so that the process time is not affected.

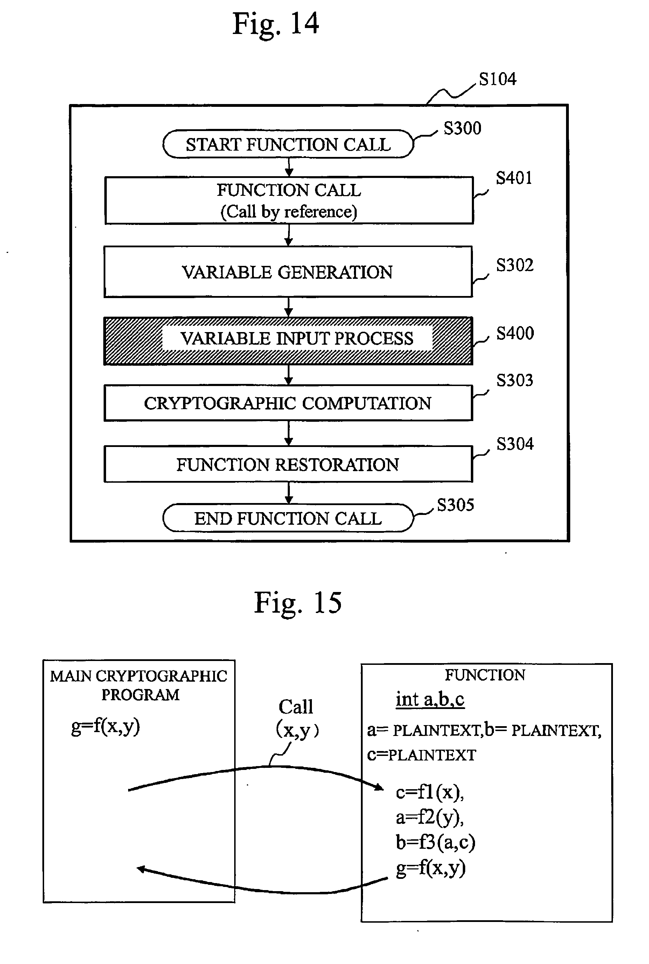

In the case of Fig. 12, the function is called after the variables are generated. Alternatively, after the data write unit 110 calls the function by "Call by reference", the data write unit 110 may generate variables in the function, perform a variable input process of the plaintext, and thereafter perform the cryptographic computation. In this case, if the plaintext is stored in global variables, it can be referred to from within the function. Fig. 14 is a flowchart showing how a variable is generated after a function is called, and a plaintext is written in the variable. Fig. 15 is a conceptual view for explaining Fig. 14. In Fig. 14, function call (S401) of Fig. 12 comes to the first step of the flow.
(1) The data write unit 110 calls the function by "Call by reference" (s401).
(2) Then, the data write unit 110 generates variables a, b, and c in the function (S302).
(3) The data write unit 110 inputs data (a plaintext or part of it), which changes for each cryptographic computation, to the generated variables a, b, and c (S400).
(4) The cryptographic computation execution unit 120 applies to the function the variables in which the plaintext is written, and executes the cryptographic computation using the function (8303). Because of the process of S400 describedabove, the values to be used in the function, immediately before they are used in the function, and the states of variables differ for each cryptographic computation, so that the effect described with reference to Fig. 6 can be obtained. Also, since no mask is used, mask exchange is unnecessary, so that the process time is not affected.

The first embodiment describes a cryptographic computation apparatus in which a CPU, using a register and a memory, performs the cryptographic computation, wherein before the cryptographic computation is started, data that changes for each cryptographic computation is written in the register and memory used for computation, and the cryptographic computation is performed.

The second and third embodiments describe a cryptographic computation apparatus in which a CPU, using a register and a memory, performs the cryptographic computation utilizing a function, wherein before the function is called, a variable to be used in the function is generated, data that changes for each cryptographic computation is written in the variable, the variable and a value which is to be used in the function are passed to the function by Call by reference, and the cryptographic computation is performed.

The second and third embodiments describe a cryptographic computation apparatus in which a CPU, using a register and a memory, performs the cryptographic computation utilizing a function, wherein a value to be used in the function is passed to the function by Call by reference, after that a variable to be used in the function is generated, data that changes for each cryptographic computation is written in the variable, and the cryptographic computation is performed using the variable and the value which is to be used in the function.

The second and third embodiments describe a cryptographic computation apparatus in which a CPU, using a register and a memory, performs the cryptographic computation, wherein a variable is generated, data that changes for each cryptographic computation is written in the variable, and the cryptographic computation is performed using the variable.

The first to third embodiments describe a cryptographic computation apparatus in which the data that changes for each cryptographic computation is any one of a plaintext, a ciphertext, a process ID, time data indicating time, and a random number.

The cryptographic computation apparatus described in the first to third embodiments can also be realized as a cryptographic computation program, as well as a "recording medium executable by a computer", which stores a cryptographic computation program. If the operations of the cryptographic computation apparatus described in the above embodiments are considered as steps, the cryptographic computation apparatus can also be realized as a cryptographic computation method.

### Brief Explanation of the Drawings

Fig. 1 shows examples of the hardware resources of the cryptographic computation apparatus of the first embodiment;
Fig. 2 is a block diagram of the cryptographic computation apparatus of the first embodiment;
Fig. 3 shows an IC card as an application example of the cryptographic computation apparatus of the first embodiment;
Fig. 4 is a flowchart showing a general procedure of the cryptographic computation of the first embodiment;
Fig. 5 is a flowchart of the cryptographic computation performed by the cryptographic computation apparatus of the first embodiment;
Fig. 6 shows the effect of the cryptographic computation apparatus of the first embodiment;
Fig. 7 explains the reason of the effect of the cryptographic computation apparatus of the first embodiment;
Fig. 8 shows the hardware resources of the cryptographic computation apparatus of the second embodiment;
Fig. 9 is a flowchart of the cryptographic computation performed by the cryptographic computation apparatus of the second embodiment;
Fig. 10 is a flowchart of the third embodiment in which variables are used;
Fig. 11 is a flowchart of the third embodiment in which a function is used;
Fig. 12 is a flowchart of the third embodiment in which the function is called after the variables are generated;
Fig. 13 is a view for explaining Fig. 12;
Fig. 14 is a flowchart in which the variables are generated after the function is called; and
Fig. 15 is a view for explaining Fig. 14.

### Explanation of Signs

- 1:: IC card
- 11:: terminal
- 100:: cryptographic computation apparatus
- 110:: data write unit
- 120:: cryptographic computation execution unit
- 140:: storage area
- 150:: CPU
- 151:: register
- 153:: bus
- 160:: RAM
- 170:: communication unit
- 180:: ROM
- 181:: cryptographic computation execution program
- 182:: authentication processing program
- 183:: application program
- 184:: data storage unit
- 185:: rewritable data storage unit
- 190:: random number generator

## Claims

1. A cryptographic computation apparatus which repeatedly executes an input conversion process including a process of inputting conversion target data which is a target of data conversion by a cryptographic computation and a process of converting the conversion target data input, into data by executing the cryptographic computation, the cryptographic computation apparatus comprising:
a data write unit which, using a CPU (Central Processing Unit), writes change data which is data that changes for each input conversion process in a predetermined storage area used for the cryptographic computation, before execution of the cryptographic computation in each input conversion process; and
a cryptographic computation execution unit which, using the CPU, executes the cryptographic computation by using the storage area where the change data is written, after the change data is written in the storage area by the data write unit.

2. The cryptographic computation apparatus according to claim 1,
wherein the cryptographic computation uses a variable,
wherein the data write unit writes, using the CPU, change data that changes for each input conversion process in a storage area where data of the variable is to be stored, before the variable is used in the cryptographic computation of each input conversion process, and
wherein the cryptographic computation execution unit executes, using the CPU, the cryptographic computation employing the variable, after the change data is written in the variable by the data write unit.

3. The cryptographic computation apparatus according to claim 2,
wherein the cryptographic computation utilizes a function that uses the variable,
wherein the data write unit writes the change data in the storage area for the variable to be used in the function, and
wherein the cryptographic computation execution unit executes the cryptographic computation by applying to the function the variable in which the change data is written.

4. The cryptographic computation apparatus according to claim 3,
wherein the data write unit generates the variable, and after the variable is generated, writes the change data in the storage area for the variable, calls the function, and passes to the function the variable in which the change data is written, and
wherein the cryptographic computation execution unit executes the cryptographic computation by applying to the function the variable passed.

5. The cryptographic computation apparatus according to claim 3,
wherein the data write unit calls the function, and after the function is called, generates the variable by executing an internal process of the function, and writes the change data in the storage area for the variable generated, and
wherein the cryptographic computation execution unit executes the cryptographic computation by applying the variable, in which the change data is written through execution of the internal process of the function by the data write unit, to the function.

6. The cryptographic computation apparatus according to any one of claims 1 to 5, wherein the change data comprises any one of
(a) a plaintext,
(b) a ciphertext,
(c) a process ID (IDentification) generated by the CPU for each input conversion process before the cryptographic computation,
(d) time data indicating current time and generated by the CPU, and
(e) a random number generated through a process of the CPU.

7. A cryptographic computation program which repeatedly executes an input conversion process including a process of inputting conversion target data which is a target of data conversion by a cryptographic computation and a process of converting the conversion target data input, into data by executing the cryptographic computation, the cryptographic computation program comprising causing a computer to execute:
a process of writing change data which is data that changes for each input conversion process in a predetermined storage area used for the cryptographic computation, before execution of the cryptographic computation in each input conversion process; and
a process of executing the cryptographic computation by using the storage area where the change data is written, after the change data is written in the storage area.

8. A cryptographic computation program which repeatedly executes an input conversion process including a process of inputting conversion target data which is a target of data conversion by a cryptographic computation and a process of converting the conversion target data input into data by executing the cryptographic computation using a variable, the cryptographic computation program comprising causing a computer to execute:
a process of writing change data which changes for each input conversionprocess in a storage areawhere data of the variable is to be stored, before the variable is used in the cryptographic computation in each input conversion process; and
a process of executing the cryptographic computation employing the variable after the change data is written in the storage area for the variable.

9. A computer-readable recording medium which stores a cryptographic computation program according to claim 7 or 8.
